**Europäisches Patentamt**

**European Patent Office**

**Office européen des brevets**

(19)

(11) Veröffentlichungsnummer: **0 064 292**
**B1**

(12)

# EUROPÄISCHE PATENTSCHRIFT

(45) Veröffentlichungstag der Patentschrift:
**12.12.84**

(51) Int. Cl.³: **A 01 B 59/043**

(21) Anmeldenummer: **82103804.9**

(22) Anmeldetag: **04.05.82**

---

(54) **Vorrichtung zum Anbau von landwirtschaftlichen Maschinen an das Dreipunkthubwerk einer Zugmaschine.**

---

(30) Priorität: **04.05.81 AT 1960/81**

(43) Veröffentlichungstag der Anmeldung:
**10.11.82 Patentblatt 82/45**

(45) Bekanntmachung des Hinweises auf die Patenterteilung:
**12.12.84 Patentblatt 84/50**

(84) Benannte Vertragsstaaten:
**CH DE FR LI NL**

(56) Entgegenhaltungen:
**DE - A - 2 141 086**
**DE - A - 2 715 112**
**DE - A - 2 808 354**
**DE - B - 1 507 220**
**DE - B - 1 557 877**
**DE - B - 2 531 289**

(73) Patentinhaber: **Alois Pöttinger Maschinenfabrik GmbH,
A-4710 Grieskirchen (AT)**

(72) Erfinder: **Frauscher, Josef, A-4942 Gurten 50 (AT)**

(74) Vertreter: **Dupal, Helmut, Dipl-Ing., Jägerweg 12,
A-4702 Wallern (AT)**

---

BUNDESDRUCKEREI BERLIN

## Beschreibung

Die Erfindung betrifft eine Vorrichtung zum Anbau landwirtschaftlicher Maschinen, insbesondere Heuwerbungsmaschinen, an das Dreipunkthubwerk einer Zugmaschine, mit einem Anbaurahmen, der zwei untere Anschlüsse und einen oberen, bewegbaren Anschluß für das Dreipunkthubwerk und eine im wesentlichen vertikale Schwenkachse aufweist, um die der Maschinenrahmen der landwirtschaftlichen Maschine an dem Anbaurahmen schwenkbar gelagert ist, wobei zwischen dem oberen bewegbaren Anschluß und dem Maschinenrahmen eine Rasteinrichtung mit einem Rastvorsprung und wenigstens einer, vorzugsweise mehreren Rastausnehmung(en) vorgesehen ist.

Bei bestimmten landwirtschaftlichen Anbaugeräten, wie z. B. zweikreiseligen Kreiselheuern, ist es im Hinblick auf die Gesamtbreite unerwünscht, wenn in der Transportstellung die Längsachse des Geräterahmens zu derjenigen der Zugmaschine parallel ist.

Außerdem muß die angebaute Maschine beim Wenden und beim Durchfahren von Kurven der Fahrspur der Zugmaschine folgen können.

Schließlich soll die Maschine in der Transportstellung in ihrer Lage zur Zugmaschine sicher fixiert sein.

Zu diesen Zwecken ist es erforderlich, daß die angebaute Maschine um eine im wesentlichen vertikale Achse verschwenkbar gelagert ist und eine selbsttätige Verriegelung zwischen Anbaurahmen und Maschine möglich ist.

Es ist in diesem Zusammenhang bereits eine Nachlaufeinrichtung zum Verbinden eines landwirtschaftlichen Arbeitsgerätes mit der Dreipunkt-Hubvorrichtung einer Zugmaschine bekannt, die aus einem mit der Dreipunkt-Hubvorrichtung verbindbaren Dreipunktrahmen, mit dem der Rahmen des Arbeitsgerätes um eine vertikale Achse schwenkbar verbunden ist, und aus einer Vorrichtung, die den Geräterahmen in der angehobenen Transportstellung an einer Verschwenkung gegenüber dem Dreipunktrahmen hindert, besteht. Hierbei ist die dem Geräterahmen zugeordnete vertikale Achse am oberen Ende mit dem Dreipunktrahmen um eine quer zur Fahrtrichtung verlaufende horizontale Achse schwenkbar verbunden und am unteren Ende in einem in Fahrtrichtung verlaufenden Langloch geführt, das in einer an dem Dreipunktrahmen befestigten Platte ausgebildet ist. Außerdem ist ein von der vertikalen Achse durchsetzter horizontaler Quersteg mit dem Geräterahmen drehfest verbunden, dessen Enden an einer quer zur Fahrtrichtung verlaufenden, am Dreipunktrahmen befestigten Anschlagplatte zur Anlage bringbar sind (DE-A-2 715 112).

Weiters ist eine Schwenkvorrichtung für eine mit mindestens einem höhenbeweglichen Stützrad versehene, über einen Tragrahmen an die Dreipunktaufhängung eines Schleppers gelenkig anschließbare landwirtschaftliche Arbeitsmaschine bekannt, deren Maschinengestell in Arbeitsstellung der Maschine am Tragrahmen um eine etwa vertikale Achse frei schwenkbar und in ausgehobener Transportstellung über ein am Maschinengestell angelenktes Riegelglied durch dessen Einrasten in eine am Tragrahmen befestigte Rastplatte selbsttätig festlegbar ist. Hierbei ist das Riegelglied über Koppelglieder mit dem in Höhenrichtung relativ zum Maschinengestell in Grenzen frei beweglichen Stützrad bzw. dessen Gestell verbunden und beim Ausheben der Maschine in eine Transportstellung durch die gewichtsbedingte Bewegung des Stützrades bzw. dessen Gestell relativ zum Maschinengestell in eine Verriegelungsstellung mit der Rastplatte steuerbar (DE-B-2 531 289).

Bei einer bekannten Vorrichtung der eingangs genannten Art ist die Maschine durch einen Längsbalken mit einer Anhängevorrichtung verbunden, mit welcher die Maschine an die Dreipunktaufhängung eines Traktors angekuppelt werden kann. Bei dieser Ausführung ist der Längsbalken einerseits mit seinem nach vorne gerichteten Ende an der Anhängevorrichtung um eine nahezu senkrechte Schwenkachse angelenkt und anderseits mit seinem nach hinten gerichteten Ende fest mit dem schrägen Träger der Maschine verbunden, um diesen Träger in Betrieb in einer Stellung zu halten, in der er mit der Fahrtrichtung der Maschine konstant einen stumpfen Winkel bildet (DE-A-2 808 354).

Bei einer weiteren bekannten Vorrichtung dieser Art ist der Längsbalken der Maschine an einem vertikalen Schwenkzapfen eines Anbaurahmens, für den Dreipunktanbau an eine Zugmaschine, gelagert. Der Anschluß für den Oberlenker ist an einem an seinem unteren Ende am Anbaurahmen gelagerten Schwenkhebel angelenkt, der ebenfalls in seinem unteren Bereich als Riegelklinke ausgebildet ist; die sich in Transportstellung in eine von mehreren Rasten eines mit dem Längsbalken der Maschine starr verbundenen Rastsegmentes einlegt. Die Riegelklinke des Schwenkhebels wird in der Arbeitsstellung der Maschine durch eine Rückstellfeder in entriegelter Stellung gehalten, damit die freie Verschwenkbarkeit der Maschine möglich ist (DE-B-1 557 877).

Alle diese bekannten Vorrichtungen sind sehr aufwendig und umfangreich, um die bei der Verriegelung auftretenden, unter Umständen sehr bedeutenden Kräfte aufnehmen zu können oder um in einer Vielzahl von Schwenklagen verriegelbar zu sein, und um in der ausgehobenen Transportlage eine einwandfreie Verriegelung beibehalten zu können.

Aufgabe der Erfindung ist es, diese Nachteile zu vermeiden um eine einfache und gleichzeitig stabile Vorrichtung zum Anbau von landwirtschaftlichen Maschinen, z. B. Heuwerbungsmaschinen wie Kreiselheuer oder Bandrechen, Mähwerken, usw. zu schaffen, durch die überhöhte Anschlagkräfte beim Verriegelungsvorgang in allen Schwenklagen der Maschine vermieden werden und die Verriegelung in allen Schwenklagen der Maschine vorgenommen werden kann.

Dies wird gemäß der Erfindung bei einer Vorrichtung der eingangs genannten Art dadurch erreicht, daß der obere Anschluß für das Dreipunkthubwerk an einem Schiebestück vorgesehen ist, das an dem Anbaurahmen in Fahrtrichtung der landwirtschaftlichen Maschine verschiebbar gelagert ist.

Auf diese Weise wird ein einfacher und stabiler Anschluß der landwirtschaftlichen Maschinen und deren leichte Verschwenkbarkeit gewährleistet.

Beim Transport kann das Schiebestück mit dem Anbaurahmen mittels einer zusätzlichen Verriegelungsvorrichtung starr verriegelt werden, damit sich die Rasteinrichtung während der Straßenfahrt durch Stöße nicht lösen kann.

In Ausgestaltung der Erfindung ist vorgesehen, daß der, mit wenigstens einer Rolle versehene Rastbolzen ausgebildete, Rastvorsprung an dem Schiebestück angebracht und die Rastausnehmung(en), in welche der Rastvorsprung einbringbar ist, an einem mit dem Maschinenrahmen der landwirtschaftlichen Maschine fest verbundenen Bauteil ausgebildet ist bzw. sind. Es wäre auch möglich, eine umgekehrte Anordnung zu treffen. Mittels der Rolle(n) wird das Einrasten des Rastvorsprunges in die Rastausnehmung(en) erleichtert.

Es ist weiters zweckmäßig, daß der Anschluß für das Dreipunkthubwerk an dem in Fahrtrichtung vorderen Ende des Schiebestückes und der Rastvorsprung an dem in Fahrtrichtung hinteren Ende des Schiebestückes angeordnet ist. Günstig ist dabei, wenn die Rastausnehmung(en) an dem das Schiebestück übergreifenden, mit dem Maschinenrahmen fest verbundenen Bauteil angebracht, zwischen dem Anschluß und dem Rastvorsprung vorgesehen sind.

Zur Begrenzung der Schwenkbewegung des Maschinenrahmens können seitliche Anschläge vorgesehen sein.

Zum Einführen des Rastvorsprunges in die Rastausnehmung(en) können seitliche Führungsflächen vorgesehen sein, die inbesondere von dem Bereich der seitlichen Anschläge für das Schiebestück ausgehend zu der bzw. den Rastausnehmung(en) führen.

Es ist günstig, daß das Schiebestück einen bolzenförmigen Abschnitt aufweist, der in einer mit dem Anbaurahmen fest verbundenen Hülse verschiebbar gelagert ist. Dadurch wird eine ausreichend lange Führung des Schiebestückes gewährleistet.

Die Erfindung wird nachstehend an Hand der Zeichnung in der ein Ausführungsbeispiel des Erfindungsgegenstandes dargestellt ist, näher beschrieben. Es zeigt

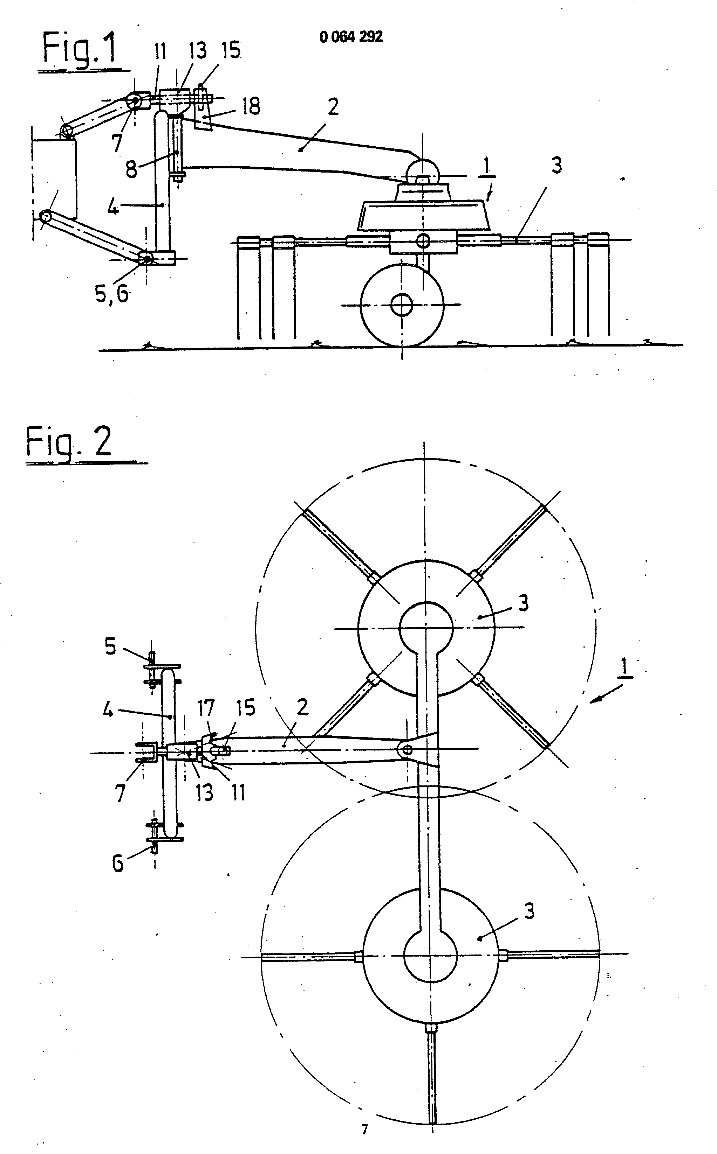

Fig. 1 eine Ansicht einer erfindungsgemäßen Vorrichtung zum Anbau einer Heuwerbungsmaschine an das Dreipunkthubwerk einer Zugmaschine,

Fig. 2 eine Draufsicht auf Fig. 1,

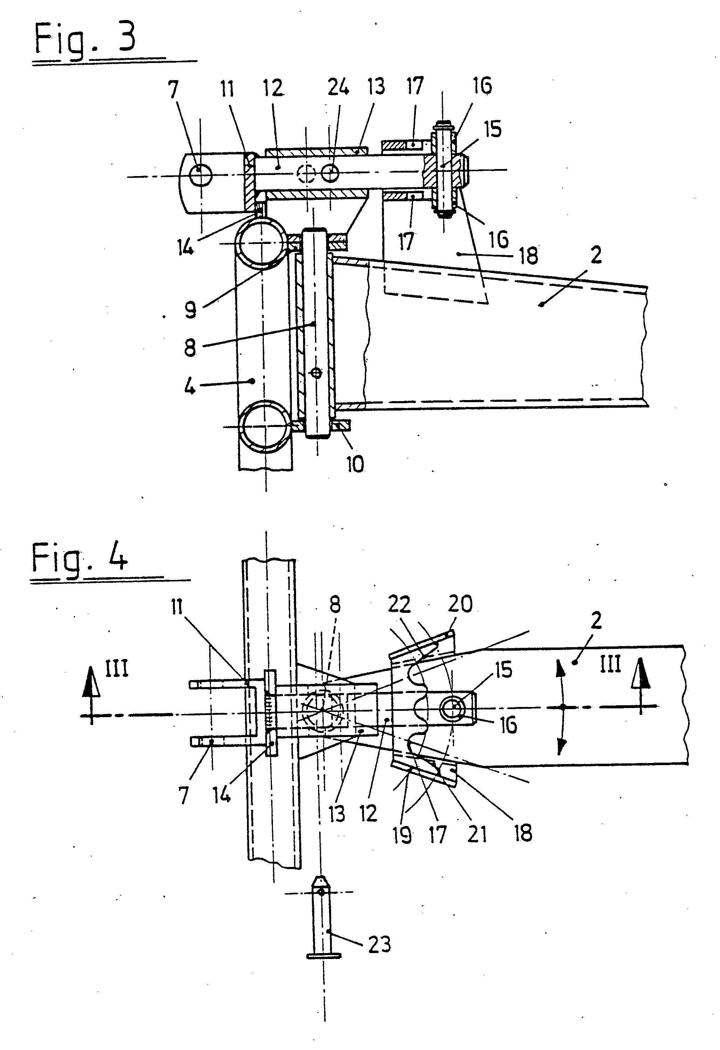

Fig. 3 eine Einzelheit der Fig. 1 in vergrößertem Maßstab, im Schnitt entlang Linie III-III in Fig. 4 und

Fig. 4 eine Draufsicht auf Fig. 3.

Die dargestellte Vorrichtung zum Anbau einer Heuwerbungsmaschine 1 mit einem Maschinenrahmen 2 und zwei um im wesentlichen lotrechte Achsen umlaufenden Rechenrädern 3 an das Dreipunkthubwerk einer nicht näher dargestellten Zugmaschine umfaßt einen Anbaurahmen 4, den sogenannten Anbaubock, mit zwei unteren Anschlüssen 5, 6 für die Unterlenker, und einem oberen Anschluß 7 für den Oberlenker des Dreipunkthubwerkes. Der als Zugbalken ausgebildete Maschinenrahmen 2 der Heuwerbungsmaschine 1 ist um eine im wesentlichen vertikale, in der Längsmittelebene des Anbaurahmens 4 angeordnete Schwenkachse 8 schwenkbar gelagert. Die Schwenkachse 8 ist an ihrem oberen und unteren Ende in Lagern 9, 10 des Anbaurahmens 4 gelagert.

Der obere Anschluß 7 für das Dreipunkthubwerk ist an einem Schiebestück 11 vorgesehen, das einen bolzenförmigen Abschnitt 12 aufweist, der in einer mit dem Anbaurahmen 4 fest verbundenen Führungshülse 13 in Fahrtrichtung verschiebbar gelagert ist. Zur Begrenzung der Verschiebebewegung des Schiebestückes 11 ist an dem Anbaurahmen 4 ein Anschlag 14 vorgesehen. Quer zur Fahrtrichtung ist das Schiebestück 11 unverschieblich angeordnet.

Der obere Anschluß 7 für das Dreipunkthubwerk ist an dem in Fahrtrichtung vorderen, gabelförmigen Ende des Schiebestückes 11 ausgebildet. An dem entgegengesetzten, in Fahrtrichtung hinteren Ende des Schiebestückes 11 ist ein Rastvorsprung 15 in Form eines Bolzens mit im wesentlichen vertikaler Achse angebracht, der oben und unten über das Schiebestück 11 vorsteht. Der Rastvorsprung 15 trägt zwei Rollen 16, die in Rastausnehmungen 17 eines das Schiebestück 11 umgreifenden, mit dem Maschinenrahmen 2 der landwirtschaftlichen Maschine fest verbundenen Bauteiles 18 ausgebildet sind. Der Rastvorsprung 15 und die Rastausnehmungen 17 bilden dabei eine Rasteinrichtung zwischen dem Schiebestück 11 und dem Maschinenrahmen 2. Bei der dargestellten Ausführung sind drei Rastausnehmungen vorhanden; es könnten jedoch auch mehr oder weniger Rastausnehmungen vorgesehen werden, u. zw. hängt die Anzahl und Lage der Rastausnehmungen von der gewünschten Schwenklage ab, in welcher die Maschine verriegelbar sein soll, und weiter auch davon, in welchem Ausmaß Seitenkräfte auf den Anbaurahmen und damit auf das Schlepperhubwerk wirken dürfen. Es ist auch möglich, nur eine einzige Rastausnehmung, z. B. in Form einer schraubenlinienförmigen Nut, vorzusehen.

Zur Begrenzung der Schwenkbewegung des Maschinenrahmens 2 um die Schwenkachse 8 sind seitliche Anschläge 19, 20 vorgesehen, die mit dem Bauteil 18 einstückig ausgebildet sind. Gegen diese Anschläge 19, 20 kommt das Schiebestück 11 mit dem bolzenförmigen Abschnitt 12, bei maximaler Ausschwenkung der Maschine zur Anlage. Zum leichteren Einführen der Rollen 16 in die Rastausnehmungen 17 sind seitliche Führungsflächen 21, 22 vorgesehen, die von dem Bereich der seitlichen Anschläge 19, 20 ausgehend in die beiden äußeren Rastausnehmungen 17 führen.

Zur Sicherung der Transportstellung ist eine zusätzliche Verriegelungseinrichtung vorgesehen, die aus einem Verriegelungsbolzen 23 und aus einer quer zur Achse des Schiebestückes 11 verlaufenden, die Hülse durchsetzenden Bohrung 24 besteht, in welche der Bolzen 23 einbringbar ist, um das Schiebestück 11 in bezug auf den Anbaurahmen 4 festzustellen, wodurch es möglich ist, die Sicherung einer Transportstellung in jeder vorhandenen Verriegelungsstellung der Verriegelungseinrichtung und damit in jeder beliebigen Schwenklage des Maschinenrahmens 2 vorzunehmen.

Die beschriebene Anordnung gewährleistet, daß die Heuwerbungsmaschine gegenüber dem Anbaurahmen 4 mittels der im wesentlichen lotrechten Schwenkachse 8 zwischen zwei Grenzlagen verschwenkbar ist, wenn die obere Anlenkstelle gewichtsentlastet ist, und in einer von mehreren Schwenklagen verriegelbar ist, wenn die obere Anlenkstelle gewichtsbelastet ist, wobei der Anbaurahmen 4 mitsamt dem Maschinenrahmen 2 um eine durch die unteren Anlenkpunkte 5, 6 verlaufende, gedachte Schwenkachse verschwenkt.

In der Transportlage kann das Schiebestück 11 mit der oberen Anlenkstelle 7 mittels des Bolzens 23 starr verbunden werden, damit sich während der Straßenfahrt die Verriegelung der Heuwerbungsmaschine durch Stöße nicht lösen kann.

Bei der erfindungsgemäßen Lösung besteht in einfachster Weise die Möglichkeit, die Rasteinrichtungsteile doppelt anzubringen und dadurch besonders günstige Belastungsverhältnisse zu schaffen.

Die Anordnung der Rasteinrichtung könnte auch abgeändert werden. Der Rastvorsprung könnte mit dem Maschinenrahmen fest verbunden werden und die Rastausnehmungen könnten am Schiebestück ausgebildet werden. Wesentlich ist nur, daß jeweils ein Teil der Rasteinrichtung mit dem Maschinenrahmen, und der andere Teil mit dem oberen Anschluß für das Dreipunkthubwerk verbunden ist.

**Patentansprüche**

1. Vorrichtung zum Anbau von landwirtschaftlichen Maschinen, insbesondere Heuwerbungsmaschinen, an das Dreipunkthubwerk einer Zugmaschine, mit einem Anbaurahmen (4), der zwei untere Anschlüsse (5, 6) und einen oberen, bewegbaren Anschluß (7) für das Dreipunkthubwerk und eine im wesentlichen vertikale Schwenkachse (8) aufweist, um die der Maschinenrahmen (2) der landwirtschaftlichen Maschine an dem Anbaurahmen (4) schwenkbar gelagert ist, wobei zwischen dem oberen bewegbaren Anschluß (7) und dem Maschinenrahmen (4) eine Rasteinrichtung mit einem Rastvorsprung (15) und wenigstens einer, vorzugsweise mehreren Rastausnehmung(en) (17) vorgesehen ist, dadurch gekennzeichnet, daß der obere Anschluß (7) für das Dreipunkthubwerk an einem Schiebestück (11) vorgesehen ist, das an dem Anbaurahmen (4) in Fahrtrichtung der landwirtschaftlichen Maschine verschiebbar gelagert ist.

2. Vorrichtung nach Anspruch 1, dadurch gekennzeichnet, daß zwischen dem Schiebestück (11) und dem Anbaurahmen (4) eine starr verbindende, zusätzliche Verriegelungseinrichtung (23, 24) angeordnet ist.

3. Vorrichtung nach Anspruch 1, dadurch gekennzeichnet, daß an dem Schiebestück (11) der als mit wenigstens einer Rolle (16) versehener Rastbolzen ausgebildete Rastvorsprung (15) angebracht und die Rastausnehmung(en) (17), in welche der Rastvorsprung (15) einbringbar ist, an einem mit dem Maschinenrahmen (2) der landwirtschaftlichen Maschine fest verbundenen Bauteil (18) ausgebildet ist, bzw. sind.

4. Vorrichtung nach Anspruch 1 bis 3, dadurch gekennzeichnet, daß an dem in Fahrtrichtung vorderen Ende des Schiebstückes (11) der Anschluß (7) für das Dreipunkthubwerk und an dem in Fahrtrichtung hinteren Ende des Schiebestückes (11) der Rastvorsprung (15) angeordnet ist.

5. Vorrichtung nach Anspruch 3 oder 4, dadurch gekennzeichnet, daß die an dem das Schiebestück (11) übergreifenden Bauteil (18) angebrachten Rastausnehmung(en) zwischen dem Anschluß (7) und dem Rastvorsprung (15) vorgesehen sind.

6. Vorrichtung nach einem der Ansprüche 1 bis 5, dadurch gekennzeichnet, daß zur Begrenzung der Schwenkbewegung des Schiebestückes (11) gegenüber dem Maschinenrahmen (2) seitliche Anschläge (19, 20) vorgesehen sind.

7. Vorrichtung nach einem der Ansprüche 1 bis 6, dadurch gekennzeichnet, daß zum Einführen des Rastvorsprunges (15) in die Rastausnehmung(en) (17) seitliche Führungsflächen (21, 22) vorgesehen sind, die insbesondere von dem Bereich der seitlichen Anschläge (19, 20) für das Schiebestück (11) ausgehend zu der bzw. den Rastausnehmung(en) (17) führen.

8. Vorrichtung nach einem der Ansprüche 1 bis 7, dadurch gekennzeichnet, daß das Schiebestück (11) einen bolzenförmigen Abschnitt (12) aufweist, der in einer mit dem Anbaurahmen (4) fest verbundenen Hülse (13) verschiebbar gelagert ist.

9. Vorrichtung nach einem der Ansprüche 1 bis 8, dadurch gekennzeichnet, daß das Schiebestück (11) mit seinem bolzenförmigen Abschnitt (12) in der Führungshülse (13) um seine Längsachse, z. B. durch Ausbildung eines Abschnittes mit eckigem, insbesondere quadratischem, Querschnitt, drehfest gelagert ist.

## Claims

1. A device for the attachment of agricultural machines, in particular tedders, to the three-point lifting mechanism of a tractor and comprising an attachment frame (4) which comprises two lower connections (5, 6) and an upper moveable connection (7) for the three-point lifting mechanism, and a substantially vertical swivel shaft (8), about which the frame (2) of the agricultural machine is swivellably mounted on the attachment frame (4), a detent device with a detent projection (15) and at least one, and preferably several, recesses (17) being provided between the upper movable connection (7) and the machine frame (4), characterized in that the upper connection (7) for the three-point lifting mechanism is provided on a slide member (11) which is mounted on the attachment frame (4) and is displaceable in the direction of travel of the agricultural machine.

2. A device according to claim 1, characterized in that a rigidly connecting additional latching device (23, 24) is arranged between the slide member (11) and the attachment frame (4).

3. A device according to claim 1, characterized in that the projection (15), formed as a latching pin provided with at least one roller (16), is provided on the slide member (11), and the recess or recesses (17), in which the projection (15) can be engaged, is or are formed in a component (18) which is solidly connected to the frame (2) of the agricultural machine.

4. A device according to claim 1 to 3, characterized in that the connection (7) for the three-point lifting mechanism is arranged at that end of the slide member (11) that leads in the direction of travel, and the projection (15) is arranged at that end of the slide member (11) that trails in the direction of travel.

5. A device according to claim 3 or claim 4, characterized in that the recess or recesses, formed in the component (18) overlapping the slide member (11), is or are provided between the connection (7) and the projection (15).

6. A device according to any one of claims 1 to 5, characterized in that lateral stops (19, 20) are provided for limiting the swivel movement of the slide member (11) relative to the machine frame (2).

7. A device according to any one of claims 1 to 6, characterized in that, for the purpose of introducing the projection (15) into the recess or recesses (17), lateral guide faces (21, 22) are provided which extend in particular from the zone of the lateral stops (19, 20) for the slide member (11) to the recess or recesses (17).

8. A device according to any one of claims 1 to 7, characterized in that the slide member (11) comprises a bolt-like portion (12) which is displaceably mounted in a sleeve (13) solidly connected to the attachment frame (4).

9. A device according to any one of claims 1 to 8, characterized in that, by means of its bolt-like portion (12), the slide member (11) is mounted in the guide sleeve (13) so as not to rotate about its longitudinal axis relatively thereto, e. g. by providing the slide member with a zone of non-circular, in particular square or rectangular, cross-section.

## Revendications

1. Dispositif pour l'accrochage de machines agricoles, en particulier de faneuses, sur le mécanisme de levage à trois points d'un tracteur, comportant un bâti d'accrochage (4) qui comporte deux organes de raccordement inférieurs (5, 6) et un organe de raccordement supérieur mobile (7) pour le mécanisme de levage à trois points, ainsi qu'un axe de pivotement (8) essentiellement vertical, autour duquel le châssis (2) de la machine agricole est monté pirotant sur le bâti d'accrochage (4), dans lequel dispositif est prévu entre l'organe de raccordement supérieur mobile (7) et le bâti d'accrochage (4) un mécanisme de butée ayant une saillie d'arrêt (15) et au moins une, et de préférence plusieurs, encoches de butée (17), caractérisé en ce que l'organe de raccordement supérieur (7) pour le mécanisme de levage à trois points est prévu sur un poussoir (11) qui est monté sur le bâti d'accrochage de façon à pouvoir coulisser dans la direction de déplacement de la machine agricole.

2. Dispositif selon la revendication 1, caractérisé en ce qu'entre le poussoir (11) et le bâti d'accrochage (4) est disposé un dispositif supplémentaire (23, 24) de blocage assurant une liaison rigide.

3. Dispositif selon la revendication 1, caractérisé en ce que la saillie d'arrêt (15) élaborée sous la forme d'une cheville d'arrêt pourvue d'au moins un galet (16) est montée sur le poussoir (11), et les encoches de butée (17), dans lesquelles la saillie d'arrêt (15) peut entrer, sont élaborées sur un élément (18) relié de façon fixe au châssis (2) de la machine agricole.

4. Dispositif selon les revendications 1 à 3, caractérisé en ce que l'organe de raccordement (7) pour le mécanisme de levage à trois points est disposé, eu égard à la direction de déplacement de la machine, à l'extrémité avant du poussoir (11), et la saillie d'arrêt (15) à son extrémité arrière.

5. Dispositif selon la revendication 3 ou 4, caractérisé en ce que la ou les encoches de butée (17) disposées sur l'élément (18) chevauchant le poussoir (11) sont prévues entre l'organe de raccordement (7) et la saillie d'arrêt (15).

6. Dispositif selon l'une des revendications 1 à 5, caractérisé en ce que, pour la limitation du mouvement de pivotement du poussoir (11) par rapport au châssis (2) de la machine, sont prévues des butées latérales (19, 20).

7. Dispositif selon l'une des revendications 1 à 6, caractérisé en ce que, pour le guidage de la saillie d'arrêt (15) dans la ou les encoches de butée (17), sont prévues des surfaces de guidage (21, 22) qui, partant en particulier de la zone des butées latérales (19, 20) prévues pour le poussoir (11), conduisent à la ou aux encoches de butée (17).

8. Dispositif selon l'une des revendications 1 à 7, caractérisé en ce que le poussoir (11) a une section (12) en forme de cheville, qui est montée coulissante dans un manchon (13) relié fixement au bâti d'accrochage (4).

9. Dispositif selon l'une des revendications 1 à 8, caractérisé en ce que le poussoir (11) avec sa section (12) en forme de cheville est monté de façon à ne pas pouvoir tourner autour de son axe longitudinal, dans le manchon de guidage (13), ladite section ayant à cet effet une coupe transversale angulaire, en particulier quadrangulaire.

Fig.1

0 064 292

Fig. 2

## Fig. 3

7  11  12  24  13  17  16

15

14

9

8

4

10

2

18

16

## Fig. 4

11  8  22  20

2

III

III

15

16

7

14

13  12

19  17  21  18

23